# EUROPEAN PATENT SPECIFICATION

(11) **EP 3 928 853 B1**
(45) Date of publication and mention of the grant of the patent: **07.06.2023**
(21) Application number: 20181885.3
(22) Date of filing: 24.06.2020
(51) Int. Cl.: B32B 5/26, B01D 39/08, B01D 39/16, B23B 25/00, B32B 5/08, B32B 5/02, B01D 39/18

(54) **COMPOSITE MEMBRANE AND METHOD FOR PRODUCING A COMPOSITE MEMBRANE**
VERBUNDMEMBRAN UND VERFAHREN ZUR HERSTELLUNG EINER VERBUNDMEMBRAN
MEMBRANE COMPOSITE ET PROCÉDÉ DE FABRICATION D'UNE MEMBRANE COMPOSITE

(43) Date of publication of application: 29.12.2021
(73) Proprietor: Sefar AG, 9410 Heiden (CH)
(72) Inventor: HOSSAIN, Mohammad Mokbul, 9419 Heiden (CH); ELLENBERGER, Christoph, 9451 Kriessem (CH); CAMANI, Matteo, 9320 Arbon (CH)
(74) Representative: Wunderlich & Heim Patentanwälte Partnerschaftsgesellschaft mbB

(56) References cited:
- EP-A1- 3 366 362
- KR-B1- 102 084 335
- US-B2- 10 571 970

## Description

The invention relates to a method for producing a composite membrane in accordance with claim 1.

The invention further relates to a composite membrane in accordance with claim 14.

A generic composite membrane and a method for the production thereof can be taken from EP 3 366 362 A1 or EP 3231 595 A1. The known composite membrane comprises a woven mesh as a carrier layer, and a membrane with a pore structure being arranged on the carrier layer, wherein the membrane is produced directly on the woven mesh by electrospinning with formation of superimposed fibers. The carrier layer and the membrane are bonded in a hot-melt process or by gluing.

From US 2008/0220676 A1 a garment having a fabric layer and a layer of coated nanofibers can be taken. Initially, the layer of nanofibers is produced which is subsequently provided with a liquid coating. Afterwards, the fiber layer thus coated is joined to a fabric layer.

A composite textile for a garment having an inner fabric layer, an outer fabric layer and a barrier layer consisting of a non-woven membrane of fibers can be taken from WO 2013/043397 A2. The fiber membrane is provided with a plasma coating before being joined to the fabric layers.

US 2013/0197664 A1 describes a filter medium with an electro-spun membrane which is applied to a support structure. The support structure can consist of metal, ceramics, fiberglass, graphite or a polymer material. US 10,571,970 B2 relates also to a combination of electro-spun membrane and support layers.

For the overall performance and long-term stability of a composite membrane, the type of bonding between the carrier layer and the membrane is of particular importance. For example, adhesive bonding can reduce or partially block openings in the carrier mesh and in the membrane resulting in a significant reduction of the throughflow performance and the specific surface area of the composite membrane. On the other side, a firm connection between the carrier layer and the membrane layer is required for avoiding the risk of delamination between both layers. Delamination of membrane layer often occurs under various stresses during their applications, which disturbs the initial shapes and status. Inadequate adhesion between electro-spun fibers in membrane layer is also an important issue.

It is an **object** of the invention to provide a method for producing a composite membrane and a respective composite membrane, by which a robust and reliable bonding together with high permeability of the composite membrane are given.

The object is achieved according to the invention on the one hand by a method with the features of claim 1 and on the other hand by a composite membrane with the features of claim 14.

Preferred embodiments of the invention are specified in the respective depending claims.

According to the invention, a method for producing a composite membrane is proposed, in which a woven mesh is provided as a carrier layer, and on the carrier layer a nanofibrous membrane with a pore structure is arranged, wherein the membrane is produced directly on the woven mesh by electrospinning of fibers being superimposed, wherein the woven mesh is produced with at least two different filaments, a first filament being made with a first polymer material and second filament being made with second polymer material, which is different to the first polymer material, and the first filaments are thermally bonded to the membrane, while the second filaments do not form a thermal bonding to the membrane. Thermal treatment also can enhance the adhesion.

According to an aspect of the invention, the woven mesh is made with at least two types of filaments being different in their materials. The first filament is made from or with a first polymer material, which enables a thermal bonding to a polymeric material of the membrane. The bonding between the first filaments of the woven mesh and at least a first contacting layer of the membrane could be established immediately by direct electrospinning of fibers of the membrane and/or the thermal bonding is carried out in a separate step by applying heat and pressure together on the woven mesh and the membrane. Due to the heat and pressure the first filaments of the woven mesh are partly melted and adhered to the membrane forming a firm bonding.

The second filament comprises a different polymer material, particularly having a different of higher melting point than the polymer material of the first filaments. In the method the temperature and pressure are adjusted in such a way that during establishing the thermal bonding of the first filaments to the membrane this melting point of the second filament material is neither reached nor exceeded. The filaments could be monofilaments or multifilaments.

By this inventive method, a composite membrane can be manufactured having a firm bonding between the woven mesh and the membrane layer due to the characteristics of the first filaments in relation to the material of the membrane as well as a robust structure of the woven mesh due to the characteristics of the second filaments. As a thermal or welding-like bonding is formed only by a part of the filaments, the number of openings being blocked by melted material is kept low. Thus, a high permeability of the composite membrane can be reached.

The composite membrane produced by the method according to the invention differs from other polymer membranes in particular by a multilayer, network-linked, three-dimensionally cross-linked, nest-like or grid-like structure with a high specific surface area, thus a high surface area to volume ratio.

According to a preferred variant of the inventive method it is provided that the electrospinning is carried out under defined conditions, wherein when contacting the woven mesh, the first polymer material of the membrane is not fully cured and forms a thermal bonding to the first filaments of the woven mesh. In particular, when electrospinning is done directly on the woven mesh, the material or fibers of the membrane are still in at least partly melted condition when contacting the woven mesh. In direct contact with the woven mesh, the material or the fibers are cured or hardened while establishing the thermal bonding with the upper contacting portions of the first filaments of the woven mesh after electrospinning step. In particular, for carrying out this method step, the temperature of the woven mesh can be heated or adjusted to a defined temperature and pressure allowing sufficient time for establishing this thermal bonding. In addition, the thermal treatment creates bonding points to the membrane and a high adhesion strength can be obtained. The heat treatment does not lead to thermal degradation and changes on chemical composition of membrane and woven mesh materials.

For reaching a high quality composite membrane, it is furthermore preferred that the electro-spun membrane comprises first fibers from a first fiber material and at least one second fiber from a second fiber material, which does not form a thermal bonding to the woven mesh. In particular, the membrane can comprise two or more fibers being made from different polymer materials. At least the material of the first fiber is selected in accordance with the polymer material of the first filament of the woven mesh in such a way that the combination of both materials allows establishing a thermal bonding. With a defined distribution of the first filaments in the woven mesh are defined pattern of thermal bondings between the woven mesh and the membrane can be achieved. This enables a fine adjustment of the degree or the strength of the thermal bondings between the woven mesh and the membrane.

According to another preferred embodiment of the invention, the electro-spun membrane is produced directly on the carrier layer with at least two layers, a first layer contacting the woven mesh is produced substantially with the first fibers and the second layer is produced substantially with the second fibers. In this embodiment, the different kind of fibers are not equally distributed in the membrane. In particular, it is provided that in the first layer contacting the woven mesh, the rate of the first fibers is higher than the rate of the second fibers, while in the second layer the rate of the second fibers is higher than the rate of the first fibers. Preferably by percentage between 60% to 90% of the first fibers in the first layer a firm thermal bonding can be achieved, while the second layer is interconnected with the first layer by the crosslinking of the different fibers.

In this method variant, it is preferred that the first layer and the second layer are produced in the same step or in two separate steps being temporarily offset. Depending on the type of materials the first and second layers can be arranged simultaneously on the woven mesh or at different times.

Alternatively, the membrane is produced with a single layer including at least two different fibers. In general, the membrane can comprise a plurality of different fibers made from different polymer materials. The fibers themselves can be formed preferably from a single polymer material or can be made from two or more different polymer materials. The material of the first fibers are especially selected for creating a firm bonding with the material contained in the carrier layer.

Preferably, the first polymer material of the first filament differs from the second polymer material of the second filament in chemical structure and/or physical properties. The polymer material may comprise a different structure of the hydrocarbons or polymer. Material having the same chemical structure may be pretreated for establishing different physical and chemical properties.

According to a preferred variant of the inventive method, the first polymer material has a first melting point, which is lower than a second melting point of the second polymer material. This selection of the polymer materials allows to establish a thermal bonding at a defined temperature with an at least partly melted material of the first filaments, while the material of the second filament is still in a firm unmelted state. This allows on the one hand a reliable thermal bonding by the first filaments to membrane and on the other hand formation of a stable structure of the woven mesh by the second filament.

In general, the woven mesh comprises first filaments from the first filament material and at least a second filament from a second filament material, which does not form a thermal bonding of the membrane. Optionally the first filaments can be made from both first and second filament materials. It is preferred, that the electro-spun membrane comprises at least a first filament from a first filament material, which forms a thermal bonding with the first filaments of the woven mesh.

According to another preferred variant of the inventive method, the first filament is produced from first filament material and/or second filament material. Preferably the first and second filaments can be produced in any cross-sectional shape or geometrical arrangement, in particular by using a melting spinning step. The mesh can weaved with different patterns using first filament and second filament. It can be obtained a maximum bond strength during thermal treatments.

For producing the thermal bonding, it is preferred according to a variant of the invention that a thermal calendaring or a thermal annealing step is performed. These steps can be carried out after the membrane layer (s) are placed on the woven mesh.

The risk of blocking of openings in the composite membrane can be further reduced in that prior to the electrospinning the woven mesh is dot-coated with a thermoplastic polymer material and the thermal bonding between the membrane and the woven mesh is provided by means of the coated polymer material. Thus, the first filaments do not need to be made completely from the first polymer material. Moreover, the first polymer material for providing the thermal bonding could be arranged only at the surface of the first filaments. The first polymer material could be completely coated on the surface or preferably dot coated with a certain pattern of dots being distant to each other. Hence, the combination of first filaments and coated woven mesh leads to more extended and connected bonding areas in composite membrane.

For creating specific characteristics according to a further development of the invention, the composite membrane is treated using a plasma coating step, wherein a surface coating is applied both to the carrier layer with the woven mesh from monofilaments and to the electro-spun membrane.

By adding or coating of particular substances, defined characteristics of the composite membrane can be created. In particular, the membrane and/or the mesh are provided with anti-viral, anti-static, anti-microbial and/or anti-fungal properties.

The invention also relates to a composite membrane comprising a woven mesh as a carrier layer, and a membrane with a pore structure being arranged on the carrier layer, the membrane being produced directly on the woven mesh by electrospinning with formation of superimposed fibers, wherein the woven mesh is produced with at least two different filaments, a first filament being made with a first polymer material and a second filament being made with a second polymer material, which is different to the first polymer material, and first filaments are thermally bonded to the membrane, while the second filaments do not have any thermal bonding to filaments of the membrane.

The composite membrane can be produced by the inventive method as described above. The described embodiments and advantages of such composite membranes can be reached.

A precise selection of the carrier layer, in particular its filament or yarn fineness, fiber content in first and second filament, geometry, weave pattern, surface texture as well as the proportion of open surfaces, can have a considerable influence on bond strength and also on the final protective vent function. The tensile qualities of the carrier layers depend on filament strength, mesh density, weave pattern and filament strength coefficient. The applicant's monofilaments exhibit high strength physical characteristics such as low shrink, high tenacity, and extremely high modulus level. They do not easily degrade when exposed to destructive chemicals and withstand in high temperature application in both wet and dry environments. The tensile properties are further influenced by the bond strength of the composite, while the thickness of the nanofibers mat is less important in determining high composite vent strength.

The mesh or fabric preferably has a filament or yarn diameter of 10 µm to 1000 µm, more preferably 15 µm to 80 µm, in particular preferably 30 µm to 150 µm and a mesh opening of up to 300 µm. According to the present invention a mesh is defined as a woven monofilament fabric. The term "mesh" is used as a synonym for "fabric" or "textile" according to the invention, which both describe the inventive carrier layer.

The inventive composite membrane can provide a dustproof property, shows abrasion resistant, is robust, has high stability, shows steam permeability, is durable, is permeable for air and gas (high flux), high throughput / flowrate, can be washed without a significant loss in structure or properties, shows comparatively high thermal stability, low unspecific adsorption (anti-adhesion), hydrophobic and/or oleophobic surface(s) and excellent biocompatibility.

According to a further embodiment of the invention, it is particularly expedient that the plasma coating is deposited both on the nanofiber membrane and on the at least one carrier layer. Thus, a flexible use of the protective vent is ensured, wherein the oil-, fat-, pathogen, allergen, dust and/or water-repellent properties of the protective vent can be ensured independently of whether the carrier layer is arranged facing the inside or outside of the of the ventilated object.

A preferred further embodiment according to the invention is that the material is at least mono-unsaturated and/or polyunsaturated, ethers, ketones, aldehydes, alkenes, alkynes, amides, amines, nitriles, thioethers, carbonic acid esters, thioesthers, sulphones, thioketones, thioaldehydes, sulfenes, sulfenamides, fluoroacrylates, siloxanes, epoxides, urethanes, acrylates, polyamide 6 (PA6), polyamide 6,6 (PA66), aliphatic polyamide, aromatic polyamide polyurethane (PU), poly(urea urethane), polyvinyl alcohol (PVA), polyacrylonitrile (PAN), polylactide (PLA), polycarbonate (PC), polybenzimidazole (PBI), polyethylenoxide (PEO), polyethylenterephthalate (PET), poly(butylene terephthalate), polysulfone (PS), polyvinylchloride (PVC), cellulose, cellulose acetate (CA), polyethylene (PE), polypropylene (PP), PVA/silica, PAN/TiO₂, polyetherimide (PEI), polyaniline, poly(ethylene naphthalate), styrenebutadiene rubber, polystyrene, poly(vinyl alcohol), poly(vinylidene fuoride), poly(vinyl butylene), polymethylmethacrylate (PMMA), copolymers, derivative compounds and blends and/or combinations thereof.

For the coating material particular preference is given to materials which, when using a plasma coating process, release radicals or ions or energetic particles which contribute to a oleophobic and non-polar teflon-like (Polytetrafluoroethylene like) surface on the protective vent.

The membrane and/or the carrier layer of the composite can be made of polyvinyliden chloride (PVDC), polyvinylidene fluoride (PVDF), polyhexamethylen adipamide (PA6.6), polydodecanamide (PA12), polypropylene (PP), polycaproamide (PA6), polyethylene terephthalate (PET), ethylene monochlor trifluor ethylene (E-CTFE), ethylene tetrafluor ethylene (ETFE), polyethylene (PE), polyoxymethylen (POM), polycaprolactone (PCL), polysulfone (PS), chitosan (CH), polyvinylbutyral (PVB), 1-dodecyltrimethylammonium bromide (DTAB), chlorhexidine (CHX), benzyltrimethylammonium bromide (BTAB), polyacrylate, high density PE, fluorized ethylenepropylene (FEP), bi-component (PA6/PA12), polybutylene terephthalat (PBT), polyetheretherketone (PEEK), perfluoralkoxy (PFA), polyacrylonitrile (acrylic fibers) (PAN), bicomponent, PET flame retardant (PET/PBT), polyundecanamide (PA11), polytetrafluorethylene (PTFE), polyphenylensulfide (PPS), polyhexamethylen sebacinamid (PA6.10), aramide (AR), polyethylene naphtalate (PEN), polyamide carbonfiber (PA/CF), polyester carbonfiber (PET/CF), polyester staple fiber / metalfiber (PET/MT), carbon fiber (CF), copper (CU), polyimide (P84), copper / silver (CU/AG), polycarbonat (PC), aliphatic polyamide, aromatic polyamide, polyurethane (PU), polyvinyl alcohol (PVA), polylactide (PLA), polybenzimidazole (PBI), polyethylenoxide (PEO), poly(butylene terephthalate), polyvinylchloride (PVC), cellulose, cellulose acetate (CA), polypropylene (PP), PVA/silica, PAN/TiO₂, PETFE, polyetherimide (PEI), polyaniline, poly(ethylene naphthalate), styrenebutadiene rubber, polystyrene, poly(vinyl butylene), polymethylmethacrylate (PMMA).

Furthermore, conductive filaments can be weaved during weaving and additives can be added to the material of the membrane and/or the carrier layer to impart additional properties, for example, an electrostatic property of the respective material can improve adhesion of the solid ultrafine particles to be filtrated.

According to the invention, it is preferred that the carrier layer is firmly connected to the membrane. This can prevent delamination and/or a relative displacement of the layers. In order to form a particularly robust composite membrane, it is advantageous according to the invention that the membrane is arranged between two carrier layers in order to increase the strength and the compression resistance of the composite. Thus, at least three layers can be provided. In this case, the membrane can be at least partly covered by carrier layers on both sides, such that at least two carrier layers can have the same requirements (sandwich arrangement) or different properties (hybrid arrangement), which can complement one another in their mode of operation. For example, a first carrier layer can be designed with a hydrophobic and/or oleophobic, i.e. oil, fat and/or water-repellent property, wherein the second nanofiber layer can be designed to repellent against sweat, blood, purulence, allergens and pathogens, in particular as defined above and the third carrier layer can be designed to be flame retardant and/or anti-static.

The inventive composite membrane can be fixed and installed into a filtration device by a seam or gluing or a frame element. The seam or gluing or frame element can be provided at least in a circumferential area of the composite. The frame may have either a firm or elastic property and encompasses the composite membrane. The seam can be a separate element or created by heating and molding or welding the edge, wherein a firm connection is formed.

According to an embodiment of the present invention the composite membrane can comprise a single or a combination of the following: prefilter as obtainable "off-the-shelf" or made from a single or alternatively a plurality of layers according to the invention i.e. membranes and/or carrier layers; postfilter that can be additionally or alternatively arranged to the prefilter on the inventive composite and can be designed from materials and layers as mentioned with regards to the prefilter; asymmetric and/or symmetric membranes as gradient membrane additionally (upstream and/or downstream of the composite membrane) and/or as part of the inventive composite membrane.

It is particularly preferred that a plurality of carrier layers and a plurality of membranes are alternately arranged in the composite, depending on the application-specific functional requirements. The individual carrier layers and membranes can, for example, be designed with different porosity, pore distribution, hydrophobicity, oleophobicity and different dust-repelling property. According to a particularly expedient further development of the inventive composite, it is advantageous that the membrane is formed with a basis weight of between about 0.05 g/m² and about 50 g/m². The average fiber diameter and pore size are already adjustable during the production of the membrane by the electrospinning method and can be adapted to the requirements of the composite membrane as required. Preferably, the pore diameter of individual pores differs from the average pore diameter by no more than 500%, preferably not more than 300%, more preferably not more than 100%. The fibers are preferably formed in membranes with a diameter of 40 nm to 1000 nm, particularly preferably 80 nm to 250 nm. The diameters of individual fibers of a membrane preferably have similar diameters. In particular, the diameter of individual fibers differs from a mean fiber diameter by less than 500%, preferably 300%, particularly preferably less than 100%. The membrane according to the invention can be used, for example, for matrasses, pillows, duvets, beddings, cushions, ventilation filter for (electric) equipment (in and/or out), (surgical) masks, (surgical) coats, intravenous inline filter sets, pressure filtration equipment (e.g. nasal spray), in particular in medical devices, room ventilation and venting barrier media for industrial applications.

The invention is also directed to a bedding product with at least one protective vent with a composite as described herewith. A bedding product comprises at least the above-described matrasses, pillows, duvets, beddings etc.

The invention is further directed to an electronic or electrical appliance with a housing with at least one composite membrane as described herewith. Those appliances comprise at least mobile phones, portable media players, high fidelity equipment, tablets, laptops, portable devices of any kind and televisions.

Furthermore, the inventive composite can be applied in filter technology, acoustic vents, ventilation filters, fuel filtration, water separation, clothing, packaging, building and electronic seals, shoes, wound dressings or facial masks. The individually adjustable porosity of the composite membrane according to the invention can, for example, advantageously contribute to a deposition of solids in a gas stream or to provision of a respiratory-active support, which can be used in a wound treatment.

The terms "membrane", "electrospinning membrane", membrane layer", "nanofiber layer", "nanofibrous layer" "nanofiber membrane", "nanofiber mat" and "nanofiber web" are used interchangeably herein to refer to an electrospinning nonwoven. A basic idea of the inventive method is to form nanofiber web from a polymer solution on a support layer using an electrospinning apparatus. In this case, the membrane can be formed with a defined porosity, i.e., at least with a defined pore size and/or pore distribution, a density of membrane-forming fibers being adjusted. The proportionate volume of the fibers as well as the average number of fibers in a given volume of the membrane can be adjusted. The carrier layer can in this case serve, in particular as a stabilizing and/or protective layer for the membrane. Thus, the inventive composite is capable of withstanding significant mechanical stress without damage associated with forming the vent into useful filter shapes and sizes.

For a particularly reliable coupling and embedding of the individual composite layers, it can be advantageous according to the invention that the membrane is bonded with the carrier layer by methods well known in the art, including but not limited to reactive hot-melt bonding, laser bonding, ultrasonic welding, lamination, thermal calendaring or a combination thereof. For example, the hotmelt-bonding can be carried out with an epoxy, acrylate and/or polyurethane adhesives. Delamination can thus be reliably prevented.

It is particularly preferred that the connecting points between the carrier layer and the membrane be provided in a point-like or linear manner and are preferably distributed evenly over the protective vent, which can only result in a slight loss of porosity or air permeability.

For a particularly efficient manufacturing method it can be advantageous according to a further development that the electrospinning membrane is produced directly on the carrier layer, the membrane being firmly connected to the carrier layer. In principle, it is possible to manufacture the membrane on a collection substrate, for example a carrier nonwoven web or a carrier fabric, by means of the electrospinning method and transfer the membrane in a second step to the desired carrier layer according to the invention, for example a fabric, in a delamination-lamination process.

The direct deposition of the membrane on the carrier layer according to the invention can prevent complex transfer processes of the membrane. Furthermore, the surface of the carrier layer can be chemically and/or morphologically modified prior to the electrospinning process, as a result the membrane can adhere particularly firmly to the carrier layer during formation of the membrane. The membrane can have a layer thickness of less than 100 µm, in particular less than 50 µm, preferably a layer thickness of 1 to 10 µm can be provided. According to the invention, a membrane with these low layer thicknesses can already contribute to the water column and air permeability according to the invention, in particular when provided on the carrier layer of the inventive composite membrane.

According to an embodiment of the inventive method, at least one further carrier layer is provided, which is likewise connected to the membrane layer, the membrane being arranged between the carrier layers. In order to protect the membrane, for example, against mechanical influences in an aggressive environment that harms the membrane, the membrane can be provided with support layers from both sides.

In the case of a multilayer arrangement, a so-called multilayer construction, the composite membrane can be formed with at least two carrier layers and at least two membrane layers, the membrane layers being arranged one above the other. Preferably, at least one carrier layer is arranged between the first membrane and the at least second membrane.

By means of the plasma coating, a ultrathin functional film, in particular a hydro- and/or oleophobic function, is applied to the composite membrane, in particular the individual fibers of the membrane and/or the individual fibers or filaments of the carrier layers. In this case, particularly thin layer thicknesses of a few nm (nanometers), in particular less than 80 nm, preferably of 5 nm to 40 nm, can be achieved. The radicals generated during plasma polymerization (radical-dominated plasma polymerization) are negligibly small relative to the pore diameter and thus they can easily penetrate into the inter-fiber/ -filament spaces. Therefore, the pore diameter of a membrane layer according to the invention is not altered by a coating after a plasma-assisted gas-phase deposition, such as, for example, the PECVD process. These plasma polymers can have embedded fluorine-containing and/or fluorine-free functional groups which are, in contrast to classical fluorocarbons, free of perfluoroalkyl acids (PFOS, PFOA etc.), which have already been identified as a worldwide threat to the environment. Moreover, wet-chemical based methods (pad-dry-cure etc.) which are commonly used in textile finishing and are not suitable for treating nanofiber web, since the openings (pores) can get clogged.

A preferred aspect of the media according to the invention is that an electrospinning membrane is produced directly on the monofilament mesh, the membrane being firmly connected to the carrier layer for further processing. The direct deposition of the membrane on the carrier layer according to the invention can prevent complex transfer processes of the membrane. Furthermore, the surface of the carrier layer can be chemically and/or morphologically modified prior to the electrospinning process, as a result the membrane can adhere particularly firmly to the carrier layer during formation of the membrane.

A preferred embodiment of the composite membrane according to the invention is that an electrospinning membranes preferably made by layer by layer deposition and the polymers of both layers may differ in chemical nature and physical properties such as molecular weight. The intermediate layer (bottom) eventually serves as adhesion promoting layer and which can be composed of temperature and pressure sensitive materials and the top layer serves as filtration functions.

A further preferred embodiment is that the layer by layer deposition is done preferably in one step using at least two e-spinning modules, each module will be fed separate polymer and also e-spinning parameters can be controlled independently.

A preferred embodiment of the media according to the invention is that the carrier layer is a monofilament mesh made from at least two different polymers having two different melting points suitable for thermal treatments. The two polymers differ in chemical nature or physical properties such as molecular weight.

Furthermore, it is preferred that the carrier layer monofilament mesh is made from two different mesh layers (e.g. double layer fabric), at least one layer is made of adhesive filament and low melting polymer.

Another embodiment of the media according to the invention is that the first filament is made from first and second filament materials. Thus, a monofilament mesh can be produced from bi-component filament. The functional properties of both the components can be exploited in one filament.

In particular it is preferred that the first filaments, second filaments or bi-component filament can be produced in any cross-sectional shape and geometrical arrangement. The properties of bi-component filament depend on
- properties of two components
- their arrangement in filament
- relative proportion of two components
- fineness of the ultimate filament

A preferred embodiment of the composite membrane or media according to the invention is that the mesh is weaved with different patterns to obtain maximum bond strength during thermal treatments.

According to a further-development of the invention the thermal treatment (annealing and/ calendaring) is done applying pressure and/ temperature to materials which results in welding both first bicomponent filament and second filament to avoid displacement / shifting of monofilament in fabric and to stabilize the carrier substrate.

In particular, the thermal treatment (annealing and/ calendaring) is done applying pressure and temperature to materials which results in welding nanofiber web together with the carrier substrate.

In addition, the thermal treatment can improve the mechanical properties of nanofibers web by
- improving crystallinity of nanofibers
- creating junctions or bonding point between nanofibers in mats
- enhancing interfibrillar bonding
- decreasing composite thickness or improving porosity of the nanofiber mats
- increasing tensile strength and modulus

Thus, new properties can be introduced to the composite materials.

The invention ensures
- robust and reliable manufacturing method
- adhesive free bonding
- cleaned process suitable for high end applications like medical, health care, food etc.
- eliminate additional processing steps eg. membrane transfer to mesh
- high consistency and high efficient process

The invention is further described below with reference to preferred embodiments, which are illustrated schematically in the accompanying drawings.

In the drawings show:
- Fig. 1: shows a schematic cross-sectional representation of a first composite membrane according to the invention with a single layer,
- Fig. 2: shows a schematic cross-sectional representation of a second composite membrane according to the invention in the so-called "sandwich" arrangement,
- Fig. 3: shows a schematic cross-sectional representation of a third composite membrane according to the invention with a multi-layer construction, and
- Fig. 4: shows a schematic cross-sectional representation of a composite membrane according to the invention in a "hybrid" arrangement with two different carrier layers.

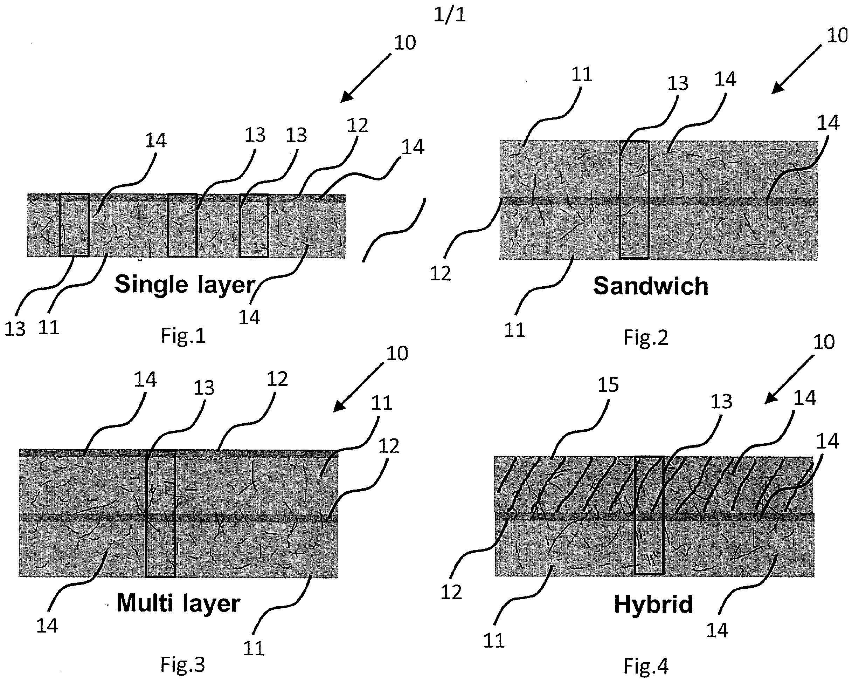

Fig. 1 shows a cross-sectional view of a composite membrane 10 according to the invention with a carrier layer 11. Preferably, the carrier layer 11 can be adapted as a mesh layer. A membrane 12 is arranged on the carrier layer 11, which is formed according to the electrospinning method and is applied on the carrier layer 11 as the woven mesh. For an improved adhesion of the membrane 12 to the carrier layer 11, the woven mesh is produced with at least two different filaments, a first filament being made with a first polymer material and a second filament being made with a second polymer material, which is different to the first polymer material, and the first filament is thermally bonded to the membrane 12, while the second filament does not form a thermal bonding to the membrane 12. The bonding can be formed with at defined connecting points 13, which connects the two layers to each other. This may be, in particular, performed by melting in the form of the contact areas of the first filaments.

For a firm bonding of membrane 12 to the carrier layer 11 of woven mesh, the mesh is weaved using two different filaments in which the first filament material has a lower melting point than second filament which forms bond to the nanofibers of the membrane 12. Furthermore, first filament can be made from first and second filament materials and thus a woven mesh with a bi-component filament is produced. To obtain maximum bond strength during thermal treatment the carrier mesh layer can be weaved with different patterns to yield more contact points with the membrane layer. The composite membrane 10, in particular the electrospinning membrane 12, can be formed with a defined porosity. The surface of the composite membrane 10 with the fibers can be coated with a coating material, which is applied in particular by the plasma deposition method. The surface coating of the fibers is schematically illustrated in the figures by the points and lines 14. In accordance with the invention, the composite membrane 10 can be completely surface-coated with the plasma polymer, meaning a coating of individual fibers and filaments of the membrane 12 and the carrier layer 11. This may also comprise fibers of the region lying in the interior of the composite membrane 10 or a lower region within the pores of the membrane 12. Thus, not only the macroscopic outer surface can be coated but also the microscopic inner surface, i.e., for example, inner fibers, non-uniformities, wherein the individual fibers are encapsulated or covered with the coating material.

Fig. 2 shows the composite membrane 10 according to the invention in a so-called "sandwich" arrangement. In this, the membrane 12 is arranged between two carrier layers 11, as a result of which the membrane layer 12 is protected, such that the resulting vent is capable of withstanding mechanical stresses in application. In one embodiment of the sandwich arrangement, for example, an air permeability of 15.6 l/m²*s at 200Pa can be achieved. In principle, an air permeability of up to 100 l/m²*s at 200Pa can be achieved in the sandwich, multilayer or hybrid arrangement. In any possible arrangement of layers in a composite membrane 10, these layers can be arranged one on top of the other by simple lamination. However, the layers can also be firmly connected to one another via connecting points 13, as a result of which a particularly reliable mechanical resilience of the composite membrane 10 can be achieved.

Fig. 3 shows a multilayer arrangement of the inventive composite membrane. In this arrangement, alternating carrier layers 11 and membrane layers 12 are provided one above the other.

According to Fig. 3, two carrier layers 11 and two membrane layers 12 are provided. However, a multilayer arrangement can also have any number of carrier layers 11 and/or membrane layers 12. It is likewise possible to provide two membrane layers 12 directly one above the other between two or more carrier layers 11. Even in the case of a multilayer arrangement, the plasma coating can be provided preferably subsequent to the layer stacking on the microscopic surface of all superimposed membrane layers 12 and carrier layers 11. Accordingly, the plasma coating can also be provided on the inside surfaces of the composite membrane 10 in the case of a multilayer construction. Each membrane 12 can be made from at least two different fibers according to the invention.

Fig. 4 shows an embodiment of the composite membrane 10 according to the invention in which the membrane layer 12 is arranged between a first carrier layer 11 and a second carrier layer 15. In principle, the first carrier layer 11 can in particular be designed as a fabric, whereas the second carrier layer 15 can differ from the first carrier layer 11 and, in particular, can be provided as a nonwoven material. With such a "hybrid" arrangement properties of different materials can advantageously be combined in the composite membrane 10, whereby filter, protective and anti-biohazardous properties can be realized in an advantageous manner in the composite membrane 10.

According to Fig. 4, a plasma coating can be provided on the entire surface of the composite membrane 10, the plasma polymerization also taking place within the composite membrane 10 in deeper layers. It is also conceivable to provide for a multilayer construction with different carrier layers 11, 15 and differently designed membrane layers 12, e.g. with different pore size distribution.

## Claims

1. Method for producing a composite membrane (10), in which
a woven mesh is provided as a carrier layer (11), and
on the carrier layer (11) a membrane (12) with a pore structure is arranged, wherein the membrane (12) is produced directly on the woven mesh by electrospinning of fibers being superimposed,
wherein
the woven mesh (11) is produced with at least two different filaments, a first filament being made with a first polymer material and a second filament being made with a second polymer material, which is different to the first polymer material, and
the first filaments are thermally bonded to the membrane, while the second filaments do not form a thermal bonding to the membrane.

2. Method according to claim 1,
wherein the electrospinning is carried out under defined conditions, wherein when contacting the woven mesh, the polymer material of the membrane is not fully cured and forms a thermal bonding to the first filaments of the woven mesh.

3. Method according to claim 1 or 2,
wherein the electro-spun membrane comprises first fibers from a first fiber material and at least one second fiber from a second fiber material, which does not form a thermal bonding to the woven mesh.

4. Method according to claim 3,
wherein the electro-spun membrane (12) is produced directly on the carrier layer with at least two layers, a first layer contacting the woven mesh is produced substantially with the first fibers and the second layer is produced substantially with the second fibers.

5. Method according to claim 4,
wherein the first layer and the second layer are produced in the same step or in two separate steps being temporally offset.

6. Method according to anyone of the claims 1 to 5,
wherein the membrane (12) is produced with a single layer including at least two different fibers.

7. Method according to anyone of the claims 1 to 6,
wherein the first polymer material of the first filaments differs from the second polymer material of the second filaments in chemical nature and/or physical properties.

8. Method according to anyone of the claims 1 to 7,
wherein the first polymer material has a first melting point, which is lower than the second melting point of the second polymer material.

9. Method according to anyone of the claims 1 to 8,
wherein the electro-spun membrane comprises at least first fibers from a first filament material, which forms a thermal bonding with the first filaments of the woven mesh.

10. Method according to anyone of the claims 1 to 9,
wherein for formation of the thermal bonding, a thermal calendaring or a thermal annealing step is performed.

11. Method according to anyone of the claims 1 to 10,
wherein the composite membrane (10) is treated using a plasma coating step, wherein a surface coating is applied both to the carrier layer (11) with the woven mesh from monofilaments and to the electro-spun membrane (12).

12. Method according to anyone of the claims 1 to 11,
wherein prior to the electrospinning the woven mesh is dot-coated with a thermoplastic polymeric material and the thermal bonding between the membrane (12) and the woven mesh is provided by means of the dot-coated polymer material.

13. Method according to anyone of the claims 1 to 12,
wherein the membrane (12) and/or the woven mesh are provided with antiviral, antistatic, antimicrobial and/or antifungal properties.

14. Composite membrane, preferably produced according to the method according to anyone of the claims 1 to 13, comprising
a woven mesh as a carrier layer (11), and
a membrane (12) with a pore structure being arranged on the carrier layer (11), the membrane (12) being produced directly on the woven mesh by electrospinning with formation of superimposed fibers,
wherein the woven mesh is produced with at least two different filaments, a first filament being made with a first polymer material and a second filament being made with a second polymer material, which is different to the first polymer material, and
the first filaments are thermally bonded to the membrane, while the second filaments do not have any thermal bonding to the membrane.

## Patentansprüche

1. Verfahren zur Herstellung einer Verbundmembran (10), bei dem ein gewobenes Gewebe als Trägerschicht (11) vorgesehen wird, und
auf der Trägerschicht (11) eine Membran (12) mit einer Porenstruktur angeordnet wird,
wobei die Membran (12) direkt auf dem gewobenen Gewebe durch Elektrospinnen von Fasern erzeugt wird, die übereinander angeordnet sind,
wobei das gewobene Gewebe (11) mit mindestens zwei unterschiedlichen Filamenten hergestellt ist, wobei ein erstes Filament mit einem ersten Polymermaterial hergestellt ist und ein zweites Filament mit einem zweiten Polymermaterial hergestellt ist, das von dem ersten Polymermaterial verschieden ist, und
die ersten Filamente thermisch mit der Membran verbunden sind, während die zweiten Filamente keine thermische Bindung mit der Membran eingehen.

2. Verfahren nach Anspruch 1,
wobei das Elektrospinnen unter definierten Bedingungen durchgeführt wird, wobei das Polymermaterial der Membran beim Kontakt mit dem gewobenen Gewebe nicht vollständig ausgehärtet ist und eine thermische Bindung mit den ersten Filamenten des gewobenen Gewebes eingeht.

3. Verfahren nach Anspruch 1 oder 2,
wobei die elektrogesponnene Membran erste Fasern aus einem ersten Fasermaterial und mindestens eine zweite Faser aus einem zweiten Fasermaterial, das keine thermische Verbindung mit dem Gewebe bildet.

4. Verfahren nach Anspruch 3,
wobei die elektrogesponnene Membran (12) direkt auf der Trägerschicht mit mindestens zwei Schichten hergestellt wird, wobei eine erste, das gewobene Gewebe berührende Schicht im Wesentlichen mit den ersten Fasern hergestellt wird und die zweite Schicht im Wesentlichen mit den zweiten Fasern hergestellt wird.

5. Verfahren nach Anspruch 4,
wobei die erste Schicht und die zweite Schicht im gleichen Schritt oder in zwei getrennten, zeitlich versetzten Schritten hergestellt werden.

6. Verfahren nach einem der Ansprüche 1 bis 5,
wobei die Membran (12) mit einer einzigen Schicht hergestellt wird, die mindestens zwei unterschiedliche Fasern enthält.

7. Verfahren nach einem der Ansprüche 1 bis 6,
wobei sich das erste Polymermaterial der ersten Filamente von dem zweiten Polymermaterial der zweiten Filamente in der chemischen Beschaffenheit und/oder den physikalischen Eigenschaften unterscheidet.

8. Verfahren nach einem der Ansprüche 1 bis 7,
wobei das erste polymere Material einen ersten Schmelzpunkt aufweist, der niedriger ist als der zweite Schmelzpunkt des zweiten Polymermaterials.

9. Verfahren nach einem der Ansprüche 1 bis 8,
wobei die elektrogesponnene Membran mindestens erste Fasern aus einem ersten Filament-Material aufweist, das eine thermische Bindung mit den ersten Filamenten des gewobenen Gewebes bildet.

10. Verfahren nach einem der Ansprüche 1 bis 9,
wobei zur Ausbildung der thermischen Bindung ein thermischer Kalandrier- oder ein thermischer Temperschritt durchgeführt wird.

11. Verfahren nach einem der Ansprüche 1 bis 10,
wobei die Verbundmembran (10) durch die Anwendung eines Plasmabeschichtungsschritt behandelt wird,
wobei eine Oberflächenbeschichtung sowohl auf die Trägerschicht (11) mit dem gewobenen Gewebe aus Monofilamenten als auch auf die elektrogesponnene Membran (12) aufgebracht wird.

12. Verfahren nach einem der Ansprüche 1 bis 11,
wobei das gewobene Gewebe vor dem Elektrospinnen mit einem thermoplastischen Kunststoff punktbeschichtet wird und die thermische Bindung zwischen der Membran (12) und dem gewobenen Gewebe mittels des punktbeschichteten Polymermaterials hergestellt wird.

13. Verfahren nach einem der Ansprüche 1 bis 12,
wobei die Membrane (12) und/oder das gewobene Gewebe antivirale, antistatische, antimikrobielle und/oder antifungielle Eigenschaften aufweisen.

14. Verbundmembran, vorzugsweise hergestellt nach dem Verfahren gemäß einem der Ansprüche 1 bis 13, mit
einem gewobenen Gewebe als Trägerschicht (11) und
einer auf der Trägerschicht (11) angeordnete Membran (12) mit einer Porenstruktur,
wobei die Membran (12) durch Elektrospinnen direkt auf dem gewobenen Gewebe unter Bildung von übereinanderliegenden Fasern hergestellt wird,
wobei das gewobene Gewebe mit mindestens zwei unterschiedlichen Filamenten hergestellt ist, wobei ein erstes Filament aus einem ersten Polymermaterial hergestellt ist und einem zweites Filament aus einem zweiten Polymermaterial hergestellt ist, das sich von dem ersten Polymermaterial unterscheidet, und
die ersten Filamente thermisch mit der Membran verbunden sind, während die zweiten Filamente keine thermische Bindung mit der Membran aufweisen.

## Revendications

1. Procédé de production d'une membrane composite (10), dans lequel un treillis tissé est fourni en tant que couche porteuse (11), et
sur la couche porteuse (11) est agencée une membrane (12) présentant une structure poreuse, dans lequel la membrane (12) est produite directement sur le treillis tissé par l'électrofilage de fibres qui sont superposées,
dans lequel
le treillis tissé (11) est produit avec au moins deux filaments différents, un premier filament étant composé d'un premier matériau polymère et un second filament étant composé d'un second matériau polymère, qui est différent du premier matériau polymère, et
les premiers filaments sont thermiquement liés à la membrane, alors que les seconds filaments ne forment pas de liaison thermique à la membrane.

2. Procédé selon la revendication 1,
dans lequel l'électrofilage est réalisé dans des conditions définies, dans lequel lors de l'entrée en contact avec le treillis tissé, le matériau polymère de la membrane n'est pas totalement durci et forme une liaison thermique aux premiers filaments du treillis tissé.

3. Procédé selon la revendication 1 ou 2,
dans lequel la membrane électrofilée comprend des premières fibres provenant d'un premier matériau fibreux et au moins une seconde fibre provenant d'un second matériau fibreux, qui ne forme pas de liaison thermique au treillis tissé.

4. Procédé selon la revendication 3,
dans lequel la membrane (12) électrofilée est produite directement sur la couche porteuse avec au moins deux couches, une première couche en contact avec le treillis tissé est produite sensiblement avec les premières fibres et la seconde couche est produite sensiblement avec les secondes fibres.

5. Procédé selon la revendication 4,
dans lequel la première couche et la seconde couche sont produites lors de la même étape ou lors de deux étapes distinctes temporellement décalées.

6. Procédé selon l'une quelconque des revendications 1 à 5,
dans lequel la membrane (12) est produite avec une unique couche incluant au moins deux fibres différentes.

7. Procédé selon l'une quelconque des revendications 1 à 6,
dans lequel le premier matériau polymère des premiers filaments diffère du second matériau polymère des seconds filaments en termes de nature chimique et/ou de propriétés physiques.

8. Procédé selon l'une quelconque des revendications 1 à 7,
dans lequel le premier matériau polymère présente un premier point de fusion, qui est inférieur au second point de fusion du second matériau polymère.

9. Procédé selon l'une quelconque des revendications 1 à 8,
dans lequel la membrane électrofilée comprend au moins des premières fibres provenant d'un premier matériau filamenteux, qui forme une liaison thermique avec les premiers filaments du treillis tissé.

10. Procédé selon l'une quelconque des revendications 1 à 9,
dans lequel pour la formation de la liaison thermique, un calandrage thermique ou une étape de recuit thermique est effectué.

11. Procédé selon l'une quelconque des revendications 1 à 10,
dans lequel la membrane composite (10) est traitée à l'aide d'une étape de revêtement au plasma, dans lequel un revêtement de surface est appliqué à la fois à la couche porteuse (11) avec le treillis tissé à partir de monofilaments et à la membrane électrofilée (12).

12. Procédé selon l'une quelconque des revendications 1 à 11,
dans lequel avant l'électrofilage le treillis tissé est revêtu par points d'un matériau polymère thermoplastique et la liaison thermique entre la membrane (12) et le treillis tissé est assurée à l'aide du matériau polymère appliqué par points.

13. Procédé selon l'une quelconque des revendications 1 à 12,
dans lequel la membrane (12) et/ou le treillis tissé sont pourvus de propriétés antivirales, antistatiques, antimicrobiennes et/ou antifongiques.

14. Membrane composite, de préférence produite selon le procédé selon l'une quelconque des revendications 1 à 13, comprenant
un treillis tissé en tant que couche porteuse (11), et
une membrane (12) présentant une structure poreuse agencée sur la couche porteuse (11), la membrane (12) étant produite directement sur le treillis tissé par électrofilage avec formation de fibres superposées,
dans laquelle le treillis tissé est produit avec au moins deux filaments différents, un premier filament étant composé d'un premier matériau polymère et un second filament étant composé d'un second matériau polymère, qui est différent du premier matériau polymère, et
les premiers filaments sont thermiquement liés à la membrane, alors que les seconds filaments ne forment pas de liaison thermique à la membrane.
